# EUROPÄISCHE PATENTSCHRIFT

(11) **EP 2 867 093 B1**
(45) Veröffentlichungstag und Bekanntmachung des Hinweises auf die Patenterteilung: **29.07.2020**
(21) Anmeldenummer: 13737173.8
(22) Anmeldetag: 02.07.2013
(51) Int. Cl.: B60W 40/04

(54) **VERFAHREN UND SYSTEM ZUR INFORMATIONSNUTZUNG**
METHOD AND SYSTEM FOR INFORMATION USAGE
PROCÉDÉ ET SYSTÈME D'UTILISATION DE L'INFORMATION

(30) Priorität: 02.07.2012 DE 102012211391
(43) Veröffentlichungstag der Anmeldung: 06.05.2015
(73) Patentinhaber: Continental Teves AG & Co. OHG, 60488 Frankfurt am Main (DE)
(72) Erfinder: KOMAR, Matthias, 60433 Frankfurt am Main (DE); STÄHLIN, Ulrich, 65760 Eschborn (DE)
(86) Internationale Anmeldenummer: PCT/EP2013/063917
(87) Internationale Veröffentlichungsnummer: WO 2014/006034

(56) Entgegenhaltungen:
- EP-A1- 1 882 620
- DE-A1-102005 002 504
- DE-A1-102009 008 959
- DE-A1-102010 029 465
- DE-A1-102011 113 316

## Beschreibung

Die Erfindung betrifft ein Verfahren zur Informationsnutzung gemäß Oberbegriff von Anspruch 1 und ein System zur Informationsnutzung gemäß Oberbegriff von Anspruch 10 sowie dessen Verwendung

Während Fahrzeug-zu-X-Kommunikation gegenwärtig noch Stand der Forschung ist, sind Umfeldsensoren und darauf basierende Fahrerassistenzsysteme im Stand der Technik bereits bekannt und gewinnen zunehmend an Verbreitung. Im Zuge einer stetigen Verbesserung der Informationserfassung, Informationsverarbeitung und damit auch der Zuverlässigkeit derartiger Fahrerassistenzsysteme findet zudem eine wachsende Sensorfusion statt. So kann beispielsweise zunächst mittels eines Radarsensors eine Entfernung zu einem vorausfahrenden Fahrzeug bestimmt werden. Über eine ebenfalls vorhandene Stereokamera kann dann z.B. eine zusätzliche Abstandsmessung vorgenommen werden, welche die vom Radarsensor ermittelte Abstandsinformation bestätigt oder verwirft.

Eine ähnliche Validierung von mittels Umfeldsensoren erfassten Informationen durch andere Umfeldsensorinformationen wird beispielsweise beim sog. "Target Validated Braking" eingesetzt und ist aus der DE 10 2008 061 301 A1 bekannt. Hier wird ein Radarsignal mittels eines Kamerasignals validiert, indem das Kamerasignal bestätigt, dass das Radarsignal von einem Fahrzeug reflektiert wird. Eine zusätzliche Abstandsmessung mittels einer Stereokamera ist nicht vorgesehen. Aufgrund dieser Validierung durch einen zweiten Sensor ist die Zuverlässigkeit der Information vergleichsweise hoch.

Eine weitergehende Fusionierung von unterschiedlichen Umfeldsensoren, wie z.B. von Radarsensoren, Kamerasensoren, Lidarsensoren und auch einem Telematiksystem, welches hier ebenfalls als Umfeldsensor verstanden wird, wird in der DE 10 2007 058 192 A1 beschrieben. Mittels eines zentralen Steuergeräts werden die jeweils nicht-redundant erfassten Informationen eines Einzelsensors überprüft, indem sie analytisch mit Informationen eines anderen Sensors verglichen werden. Auf diese Weise kann ggf. eine Informationsredundanz hergestellt werden, welche die Basis für sicherheitsrelevante Eingriffe in die Fahrzeugsteuerung bildet.

Eine Informationszuordnung von mittels Umfeldsensoren erfassten Informationen zu mittels Fahrzeug-zu-X-Kommunikation erfassten Informationen ist jedoch oftmals nur erschwert bzw. überhaupt nicht möglich, da diese beiden Informationsgattungen in der Regel mit stark unterschiedlichen Messungenauigkeiten behaftet sind, wobei die Fahrzeug-zu-X-Informationen üblicherweise die größeren Messungenauigkeiten aufweisen. Verursacht wird dies dadurch, dass die für gewöhnlich von den Fahrzeug-zu-X-Informationen umfassten Angaben "Position", "Geschwindigkeit" und "Beschleunigung" zumindest teilweise auf GNSS-Informationen basieren, welche naturgemäß vergleichsweise ungenau sind. Weitere daraus entstehende Probleme sind die erschwerte bzw. unmögliche Zuordnung der aktuell fusionierten Informationen zu den bereits in einem vorigen Zyklus fusionierten Informationen, um z.B. eine Objektverfolgung zu gewährleisten, und die in der Regel unterschiedlichen zeitlichen Dauern der Erfassungszyklen von Umfeldsensoren und Fahrzeug-zu-X-Kommunikationseinrichtungen.

Die DE 10 2011 113 316 A zeigt eine Analyse von Sensordaten unter Berücksichtigung der Unschärfe. Die Unschärfe wird nach einem statistischen Verfahren berechnet, Sigma-Verfahren, Standardabweichung. Gemäß der DE 10 2011 113 316 A erfolgt kein Vergleich der jeweils vorliegenden Unschärfebehaftungen. Stattdessen wird überprüft, ob sich die Unschärfebereiche der beiden Messungen überlappen. Wenn diese der Fall ist, wird die Schlussfolgerung gezogen, dass die Sensoren korrekt arbeiten.

EP 1 882 620 A beschreibt eine Datenanalyse und -fusion. Die aus unterschiedlichen Sensoren gewonnenen Daten werden plausibilisiert. Anschließend werden die Messwerte selbst miteinander verglichen. Voraussetzung ist eine Mindestqualität des B-Sensors. Wenn der Unterschied zwischen den Messungen größer ist als ein festgelegter relativer Betrag, wird das GPS-Signal verworfen.

Der Erfindung liegt daher die Aufgabe zugrunde, ein Verfahren vorzuschlagen, welches in allen Situationen eine möglichst effiziente Informationsnutzung von Sensorinformationen unterschiedlicher Sensorgattungen und von mittels Fahrzeug-zu-X-Kommunikation empfangenen Informationen ermöglicht.

Diese Aufgabe wird erfindungsgemäß durch das Verfahren zur Informationsnutzung gemäß Anspruch 1 gelöst.

Gemäß dem erfindungsgemäßen Verfahren zur Informationsnutzung werden mittels Sensoren einer ersten Sensorgattung erste Sensordaten erfasst und mittels Sensoren einer zweiten Sensorgattung zweite Sensordaten erfasst. Identische Objekte und/oder Objektattribute beschreibende Informationen in den ersten Sensordaten werden einander zugeordnet und identische Objekte und/oder Objektattribute beschreibende Informationen in den zweiten Sensordaten werden ebenfalls einander zugeordnet. Die ersten Sensordaten weisen erste Unschärfebehaftungen auf und die zweiten Sensordaten weisen zweite Unschärfebehaftungen auf. Die Werte der zweiten Unschärfebehaftungen mindestens können so groß sein wie Werte der ersten Unschärfebehaftungen. Das Verfahren zeichnet sich dadurch aus, dass ein Vergleich der Werte der ersten und der zweiten Unschärfebehaftungen der identische Objekte und/oder Objektattribute beschreibenden Informationen in den ersten und den zweiten Sensordaten erfolgt, wobei bei im Wesentlichen gleich großen Werten die identische Objekte und/oder Objektattribute beschreibenden Informationen in den ersten und den zweiten Sensordaten einander zugeordnet werden und wobei bei im Wesentlichen nicht gleich großen Werten die identische Objekte und/oder Objektattribute beschreibenden Informationen in den ersten Sensordaten durch die zweiten Sensordaten bestätigt oder verworfen werden. Daraus ergibt sich der Vorteil, dass abhängig von den jeweiligen Unschärfebehaftungen in jedem Falle eine weitestgehend optimale Informationsnutzung stattfindet. Sofern also die Werte der Unschärfebehaftungen im Wesentlichen gleich groß sind, werden die mittels der unterschiedlichen Sensorgattungen erfassten Informationen einander zugeordnet, d.h., es findet eine an sich bekannte Fusion dieser Informationen von unterschiedlichen Sensorgattungen statt. Die solcherart fusionierten Informationen gelten als besonders zuverlässig und eignen sich in der Regel als Grundlage für autonome Steuereingriffe in eine Fahrzeugsteuerung. Falls die Werte der Unschärfebehaftungen jedoch im Wesentlichen nicht gleich groß sind, so werden die zweiten Sensordaten zumindest dazu genutzt, um Informationen in den ersten Sensordaten prinzipiell zu bestätigen oder zu verwerfen. Somit werden die ersten Sensordaten durch die zweiten Sensordaten in diesem Falle also validiert, wodurch auch ihnen eine größere Zuverlässigkeit zugebilligt wird und auch sie ggf. für weitergehende Aktionen, wie z.B. die Ausgabe einer Warnung, verwendet werden können. Indem ausschließlich diejenigen Informationen einander zugeordnet werden, deren Werte der Unschärfebehaftungen im Wesentlichen gleich groß sind, ergibt sich der weitere Vorteil, dass der in der Regel vergleichsweise hohe elektronische Rechenaufwand für die Zuordnung reduziert werden kann. Dennoch werden alle erfassten Informationen weitestgehend optimal genutzt.

Die Werte der Unschärfebehaftungen werden im Sinne der Erfindung als im Wesentlichen gleich groß angesehen, wenn sie um nicht mehr als 50 %, insbesondere um nicht mehr als 25 %, voneinander abweichen. Als Größe für die Unschärfebehaftungen kann z.B. die aus der Statistik bekannte sog. Standardabweichung herangezogen werden. Ebenso können aber auch andere bekannte Größen herangezogen werden, welche ein Maß für die Streuung von Werten um einen Referenzwert angeben. Als Referenzwert eignet sich erfindungsgemäß z.B. ein Mittelwert, ein Maximalwert oder auch ein Median.

Bevorzugt ist es vorgesehen, dass die Sensoren der ersten Sensorgattung Umfeldsensoren sind und die Sensoren der zweiten Sensorgattung Fahrzeug-zu-X-Kommunikationsmittel sind. Daraus ergibt sich der Vorteil, dass Informationen von diesen beiden nach stark unterschiedlichen Prinzipien arbeitenden Sensorgattungen auf einfache Weise einander zugeordnet werden können bzw. die Fahrzeug-zu-X-Informationen die Umfeldsensorinformationen auf einfache Weise bestätigen oder verwerfen können. Dies trägt weiter dazu bei, den insbesondere in diesem speziellen Fall sehr hohen elektronischen Rechenaufwand, welcher bei der Zuordnung von Fahrzeug-zu-X-Informationen zu Umfeldsensorinformationen üblicherweise entsteht, zu reduzieren. Somit können entsprechende Recheneinheiten kleiner und kostengünstiger ausgelegt werden.

Auch eine weitere Unterteilung der Umfeldsensoren in unterschiedliche Klassen von Umfeldsensoren ist erfindungsgemäße bevorzugt. So kann es bei der Ausführung des erfindungsgemäßen Verfahrens sinnvoll sein, Sensordaten eines Kamerasensors von Sensordaten eines Radarsensors zu unterscheiden, wenn diese beispielsweis stark unterschiedliche Erfassungszyklusdauern aufweisen oder stark unterschiedliche Unschärfebehaftungen aufweisen.

In einer weiteren bevorzugten Ausführungsform ist es vorgesehen, dass die ersten und zweiten Sensordaten jeweils zumindest eine Positionsinformation umfassen und für den Vergleich zunächst die Werte der Unschärfebehaftungen der Positionsinformationen herangezogen werden. Die Positionsinformationen bieten in der Regel einen guten Anhaltspunkt, um auf ihrer Basis die Werte der Unschärfebehaftungen der weiteren Sensorinformationen der jeweiligen Sensorgattung abzuschätzen, da die Positionsinformationen in eine Vielzahl weiterer Informationen, wie z.B. Geschwindigkeits- oder Beschleunigungsinformationen, einfließen. Somit kann der ggf. unnötige Vergleich der Werte der Unschärfebehaftungen weiterer Informationen vermieden werden. Die zweiten Sensorinformationen können stattdessen sofort dazu verwendet werden, die ersten Sensorinformationen zu bestätigen oder zu verwerfen.

In einer besonders bevorzugten Ausführungsform ist es vorgesehen, dass zumindest die Positionsinformation in den zweiten Sensordaten vor einem Senden über die Fahrzeug-zu-X-Kommunikationsmittel unter Heranziehen von Daten eines globalen Navigationssatellitensystems erzeugt wurde.
Gemäß aktuellen Standardisierungsbestrebungen sollen zukünftig verwendete Fahrzeug-zu-X-Kommunikations-mittel periodisch sog. "Cooperative Awareness Messages" senden, welche zumindest eine Positionsinformation und ggf. auch eine Geschwindigkeits- und Beschleunigungsinformation umfassen. Die Positionsinformation kann dabei vergleichsweise einfach ausschließlich aus Daten eines globalen Navigationssatellitensystems, wie z.B. GPS, erzeugt werden. Aber auch die Erzeugung der Geschwindigkeits- und Beschleunigungsinformation ist unter Heranziehen der Daten eines globalen Navigationssatellitensystems möglich.

Zweckmäßigerweise ist es vorgesehen, dass die Zuordnung der Sensordaten die Schritte
- Objekterkennung in den aktuell erfassten Sensordaten und/oder
- Objektverfolgung aus den zuvor erfassten in die aktuell erfassten Sensordaten und/oder
- Ausgleichen von Erfassungszyklusdifferenzen der Sensoren und/oder der Sensorgattungen
umfasst. Die Objekterkennung ermöglicht zunächst das Erkennen eines bestimmten Objekts in den Sensordaten, d.h., dass eine Information in den Sensordaten der ersten und zweiten Sensorgattung als ein Objekt beschreibend erkannt wird. Somit wird die Zuordnung identische Objekte und/oder Objektattribute beschreibender Informationen in den ersten und zweiten Sensordaten erleichtert. Die Objektverfolgung ermöglicht darüber hinaus eine Zuordnung über mehrere Erfassungszyklen hinweg. Dies ermöglicht es z.B., ein sich relativ zum Sensor bewegendes Objekt als solches zu erkennen und dem Objekt das entsprechende Objektattribut "Bewegung" zuzuordnen. Die Objektverfolgung erfolgt bevorzugt mittels eines Kalmanfilters, eines Partikelfilters oder gattungsgemäßer Filterverfahren. Das Ausgleichen von Erfassungszyklusdifferenzen der Sensoren bzw. der Sensorgattungen ist besonders dann von Bedeutung, wenn die Sensoren bzw. die Sensorgattungen mit deutlich verschiedenen Erfassungszyklusdauern arbeiten. In diesem Fall können z.B. mittels zeitlicher Extrapolation Zwischenwerte der Sensordaten einer Sensorgattung gebildet werden, um auf diese Weise weitestgehend einheitliche Erfassungszyklusdauern zu simulieren und eine unproblematische Zuordnung identische Objekte und/oder Objektattribute beschreibender Informationen zu ermöglichen. Insgesamt ermöglichen diese Schritte somit eine einfache, umfassende und zuverlässige Zuordnung der identische Objekte und/oder Objektattribute beschreibenden Informationen in unterschiedlichen Sensordaten. Der Ausgleich der Erfassungszyklusdifferenzen kann dabei auch als erster Schritt durchgeführt werden. Die anderen beiden Schritte können zuerst für jeden Sensor getrennt durchgeführt werden oder aber direkt für mehrere Sensoren kombiniert.

Außerdem ist es vorteilhaft, dass Schwellenwerte eines auf die ersten Sensordaten wirkenden Objekterkennungsalgorithmus mittels der zweiten Sensordaten reduziert werden. Daraus ergibt sich der Vorteil, dass eine ein Objekt beschreibende Information in den zweiten Sensordaten gezielt in den ersten Sensordaten gesucht werden kann und das Erkennen dieser Information in den ersten Sensordaten somit vereinfacht wird, indem der dem Objekterkennungsalgorithmus zugehörige Schwellenwert reduziert wird. Dadurch wird ggf. eine der Information aus den zweiten Sensordaten entsprechende Information in den ersten Sensordaten erkannt, die sonst nicht erkannt worden wäre. Somit wird auch in diesem Fall eine Zuordnung dieser identische Objekte und/oder Objektattribute beschreibenden Informationen in den ersten und zweiten Sensordaten möglich.

Bevorzugt ist es vorgesehen, dass ein oberer Grenzwert für die Werte der Unschärfebehaftungen vorgegeben ist, bei dessen Überschreiten unabhängig vom Vergleich die identische Objekte und/oder Objektattribute beschreibenden Informationen in den ersten und den zweiten Sensordaten einander nicht zugeordnet werden. Daraus ergibt sich der Vorteil, dass eine unmögliche oder nur unter erschwerten Bedingungen und somit ggf. nur mit eingeschränkter Zuverlässigkeit mögliche Zuordnung von Informationen von vornherein unterbunden wird.

Besonders bevorzugt ist es vorgesehen, dass der obere Grenzwert in Abhängigkeit einer erfassten Umfeldobjektdichte angepasst wird, wobei der obere Grenzwert mit einer steigenden Umfeldobjektdichte verringert wird und mit einer abnehmenden Umfeldobjektdichte erhöht wird. Da z.B. im Stadtverkehr üblicherweise mit einer höheren Objektdichte in Form von Fahrzeugen, Radfahrern und Fußgängern zu rechnen ist als auf einer Landstraße, ergibt sich daraus der Vorteil, dass das erfindungsgemäße Verfahren an die jeweiligen Umfeldbedingungen anpassbar ist, um jederzeit situationsabhängig die notwendige Zuverlässigkeit zu gewährleisten.

Zweckmäßigerweise ist es vorgesehen, dass bei sich widersprechenden ersten Sensordaten und/oder unplausiblen ersten Sensordaten identische Objekte und/oder Objektattribute beschreibende Informationen in den ersten und den zweiten Sensordaten einander stets zugeordnet werden. Da nur zu denjenigen Informationen in den ersten Sensordaten entsprechende Informationen in den zweiten Sensordaten existieren, die zutreffend und plausibel sind, werden auch keine unzutreffenden bzw. unplausiblen Informationen einander zugeordnet und somit nicht fälschlich als besonders zuverlässig gekennzeichnet. Das erfindungsgemäße Verfahren kann somit also auch im Falle von sich widersprechenden ersten Sensordaten bzw. unplausiblen ersten Sensordaten zuverlässig ausgeführt werden.

Die Erfindung betrifft weiterhin ein System zur Informationsnutzung, welches zumindest Sensoren einer ersten Sensorgattung und Sensoren einer zweiten Sensorgattung und Vergleichsmittel und Zuordnungsmittel und Bestätigungsmittel umfasst, wobei die Sensoren der ersten Sensorgattung erste Sensordaten erfassen und die Sensoren der zweiten Sensorgattung zweite Sensordaten erfassen. Die Zuordnungsmittel ordnen identische Objekte und/oder Objektattribute beschreibende Informationen in den ersten Sensordaten und identische Objekte und/oder Objektattribute beschreibende Informationen in den zweiten Sensordaten einander zu, wobei die ersten Sensordaten erste Unschärfebehaftungen aufweisen und die zweiten Sensordaten zweite Unschärfebehaftungen aufweisen. Werte der zweiten Unschärfebehaftungen können dabei mindestens so groß sein wie Werte der ersten Unschärfebehaftungen. Das System zeichnet sich dadurch aus, dass die Vergleichsmittel einen Vergleich der Werte der ersten und der zweiten Unschärfebehaftungen die identische Objekte und/oder Objektattribute beschreibenden Informationen in den ersten und den zweiten Sensordaten ausführen, wobei die Zuordnungsmittel bei im Wesentlichen gleich großen Werten die identische Objekte und/oder Objektattribute beschreibenden Informationen in den ersten und den zweiten Sensordaten einander zuordnen und wobei die Bestätigungsmittel bei im Wesentlichen nicht gleich großen Werten die identische Objekte und/oder Objektattribute beschreibenden Informationen in den ersten Sensordaten durch die zweiten Sensordaten bestätigen oder verwerfen. Das erfindungsgemäße System umfasst somit alle notwendigen Mittel zur Ausführung des erfindungsgemäßen Verfahrens und ermöglicht auf einfache Weise eine umfassende und zuverlässige Zuordnung identische Objekte und/oder Objektattribute beschreibender Informationen unterschiedlicher Sensordaten von unterschiedlichen Sensorgattungen. Daraus ergeben sich die bereits beschriebenen Vorteile.

Vorzugsweise zeichnet sich das System dadurch aus, dass die Sensoren der ersten Sensorgattung ein oder mehrere Elemente aus der Gruppe
- Radarsensor,
- optischer Kamerasensor,
- Lidarsensor,
- Lasersensor und
- Ultraschallsensor

sind. Bei den genannten Elementen handelt es sich um im Kraftfahrzeugbereich typischerweise verwendete Sensoren, die im Wesentlichen eine umfassende Erfassung und Erkennung des Fahrzeugumfelds ermöglichen. Zum gegenwärtigen Zeitpunkt ist bereits eine Vielzahl von Fahrzeugen serienmäßig mit mehreren der genannten Sensoren ausgestattet und diese Zahl wird in Zukunft aller Voraussicht nach weiter steigen. Der zusätzliche Einbau- und Kostenaufwand zur Implementierung des erfindungsgemäßen Verfahrens in ein Kraftfahrzeug ist daher gering.

Weiterhin ist es vorteilhaft, dass die Sensoren der zweiten Sensorgattung ein oder mehrere Elemente aus der Gruppe
- WLAN-Verbindungsmittel, insbesondere nach IEEE 802.11,
- ISM-Verbindunsmittel (Industrial, Scientific, Medical Band),
- Bluetooth®-Verbindungsmittel,
- ZigBee-Verbindungsmittel,
- UWB-Verbindungsmittel (Ultra Wide Band),
- WiMax®-Verbindungsmittel (Worldwide Interoperability for Microwave Access),
- Infrarotverbindungsmittel,
- Mobilfunkverbindungsmittel und
- radarbasierte Kommunikationsmittel
sind. Diese Verbindungsmittel bieten dabei unterschiedliche Vor- und Nachteile. WLAN-Verbindungen ermöglichen z.B. eine hohe Datenübertragungsrate und einen schnellen Verbindungsaufbau. ISM-Verbindungen bieten hingegen nur eine geringere Datenübertragungsrate, sind aber vergleichsweise gut zur Datenübertragung um Sichthindernisse herum geeignet. Infrarotverbindungen wiederum bieten ebenfalls eine geringe Datenübertragungsrate. Mobilfunkverbindungen schließlich werden durch Sichthindernisse nicht beeinträchtigt und bieten zusätzlich eine gute Datenübertragungsrate. Dafür ist ihr Verbindungsaufbau jedoch vergleichsweise langsam. Durch die Kombination und gleichzeitige bzw. parallele Nutzung mehrerer dieser Verbindungsklassen ergeben sich weitere Vorteile, da so die Nachteile einzelner Verbindungsklassen ausgeglichen werden können.

Bevorzugt ist es vorgesehen, dass das System das erfindungsgemäße Verfahren ausführt.

Die Erfindung betrifft weiterhin eine Verwendung des erfindungsgemäßen Systems in einem Fahrzeug, insbesondere in einem Kraftfahrzeug.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: einen beispielhaften Verfahrensablauf in Form eines Flussdiagramms,
- Fig. 2: eine beispielhafte Verkehrssituation, in der eine Information aus den zweiten Sensordaten zur Bestätigung einer ihr entsprechenden Information in den ersten Sensordaten genutzt wird und
- Fig. 3: eine weitere beispielhafte Verkehrssituation, in der Schwellenwerte eines auf die ersten Sensordaten wirkenden Objekterkennungsalgorithmus mittels der zweiten Sensordaten reduziert werden.

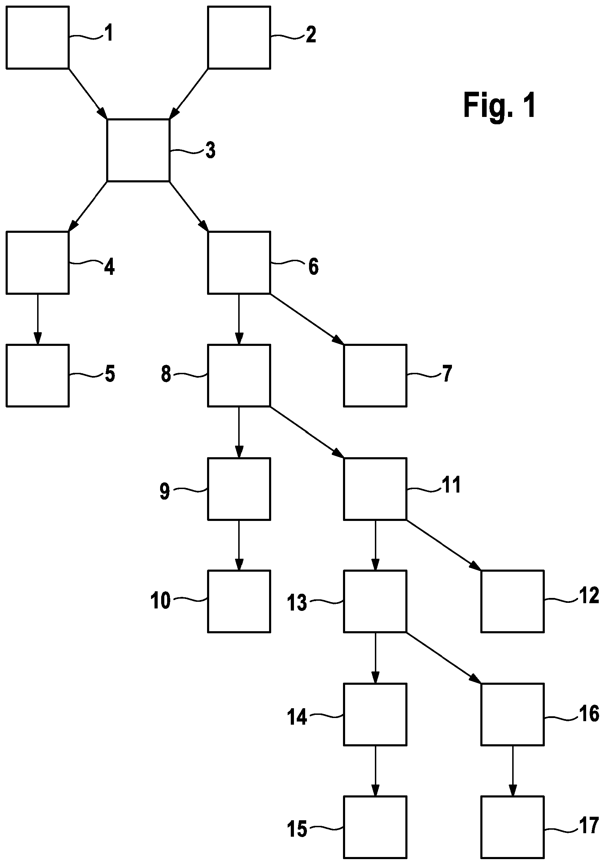

In Fig. 1 ist ein möglicher Ablauf des erfindungsgemäßen Verfahrens dargestellt. In Schritt 1 werden zunächst mittels Sensoren einer ersten Sensorgattung erste Sensordaten eines Fahrzeugs erfasst. Gemäß dem dargestellten Ausführungsbeispiel handelt es sich hierbei um mittels eines Kamerasensors und eines Radarsensors erfasste Umfelddaten, welche das Fahrzeug beschreiben. In Verfahrensschritt 2 werden mittels Sensoren einer zweiten Sensorgattung zweite Sensordaten erfasst, wobei es sich in diesem Fall um mittels Fahrzeug-zu-X-Kommunikationmitteln erfasste Fahrzeug-zu-X-Daten desselben Fahrzeugs handelt. Im folgenden Schritt 3 werden die Werte der Unschärfebehaftungen der von den Umfelddaten und den Fahrzeug-zu-X-Daten umfassten Positionsinformationen verglichen. Sofern in Schritt 4 festgestellt wird, dass der Wert der Unschärfebehaftung der Positionsinformation in den Fahrzeug-zu-X-Daten zwischen 75 % und 125 % des Werts der Unschärfebehaftung der Positionsinformation in den Umfelddaten beträgt, werden in Schritt 5 alle identische Objekte und/oder Objektattribute beschreibenden Informationen in den Umfelddaten und den Fahrzeug-zu-X-Daten einander zugeordnet. Dies entspricht einer Sensordatenfusion. Die solcherart zugeordneten Daten sind besonders zuverlässig und können als Basis für autonome bzw. automatisierte Eingriffe in eine Fahrzeugsteuerung verwendet werden. Sofern jedoch in Schritt 6 festgestellt wird, dass der Wert der Unschärfebehaftung der Positionsinformation in den Fahrzeug-zu-X-Daten nicht zwischen 75 % und 125 % des Werts der Unschärfebehaftung der Positionsinformation in den Umfelddaten beträgt, wird das erfindungsgemäße Verfahren gemäß den Schritten 7 und 8 fortgesetzt. In Schritt 7 wird die in den Fahrzeug-zu-X-Daten enthaltene Positionsinformation dazu genutzt, die Positionsinformation in den Umfelddaten zu bestätigen. Es gilt somit als bestätigt, dass sich etwa an der von den Positionsinformationen beschriebenen Stelle ein Fahrzeug befindet und eine Fehlerfassung durch den Kamerasensor bzw. den Radarsensor kann somit ausgeschlossen werden. Die auf diese Art bestätigte Information ist jedoch nicht exakt genug und zuverlässig genug, um auf ihrer Basis einen autonomen Eingriff in die Fahrzeugsteuerung auszuführen. In Verfahrensschritt 8 erfolgt nun ein Vergleich der Werte der Unschärfebehaftungen der Geschwindigkeitsinformationen in den Umfelddaten und in den Fahrzeug-zu-X-Daten. Falls im folgenden Schritt 9 festgestellt werden kann, dass der Wert der Unschärfebehaftung der Geschwindigkeitsinformation in den Fahrzeug-zu-X-Daten zwischen 75 % und 125 % des Werts der Unschärfebehaftung der Geschwindigkeitsinformation in den Umfelddaten beträgt, werden in Schritt 10 die Geschwindigkeitsinformationen in den Umfelddaten und den Fahrzeug-zu-X-Daten einander zugeordnet. Eine Zuordnung weiterer identische Objekte und/oder Objektattribute beschreibender Informationen in den Umfelddaten und den Fahrzeug-zu-X-Daten unterbleibt jedoch zunächst. Falls allerdings in Schritt 11 festgestellt wird, dass der Wert der Unschärfebehaftung der Geschwindigkeitsinformation in den Fahrzeug-zu-X-Daten nicht zwischen 75 % und 125 % des Werts der Unschärfebehaftung der Geschwindigkeitsinformation in den Umfelddaten beträgt, wird das erfindungsgemäße Verfahren gemäß den Schritten 12 und 13 fortgesetzt. In Verfahrensschritt 12 wird die in den Umfeld-daten enthaltene Geschwindigkeitsinformation durch die in den Fahrzeug-zu-X-Daten enthaltene Geschwindigkeitsinformation bestätigt. In Schritt 13 erfolgt ein weiterer Vergleich, wobei hier die Werte der Unschärfebehaftungen der Beschleunigungsinformationen in den Umfelddaten und in den Fahrzeug-zu-X-Daten verglichen werden. Sofern in Schritt 14 festgestellt wird, dass der Wert der Unschärfebehaftung der Beschleunigungsinformationen in den Fahrzeug-zu-X-Daten zwischen 75 % und 125 % des Werts der Unschärfebehaftung der Beschleunigungsinformationen in den Umfelddaten beträgt, werden in Schritt 15 die Beschleunigungsinformationen in den Umfelddaten und den Fahrzeug-zu-X-Daten einander zugeordnet. Auch in diesem Fall werden analog zu Schritt 10 keine weiteren identische Objekte und/oder Objektattribute beschreibenden Informationen in den Umfelddaten und den Fahrzeug-zu-X-Daten einander zugeordnet. Falls jedoch in Schritt 15 festgestellt wird, dass der Wert der Unschärfebehaftung der Beschleunigungsinformationen in den Fahrzeug-zu-X-Daten nicht zwischen 75 % und 125 % des Werts der Unschärfebehaftung der Beschleunigungsinformationen in den Umfelddaten beträgt, wird in Schritt 17 lediglich eine Bestätigung der Beschleunigungsinformation in den Umfelddaten vorgenommen.

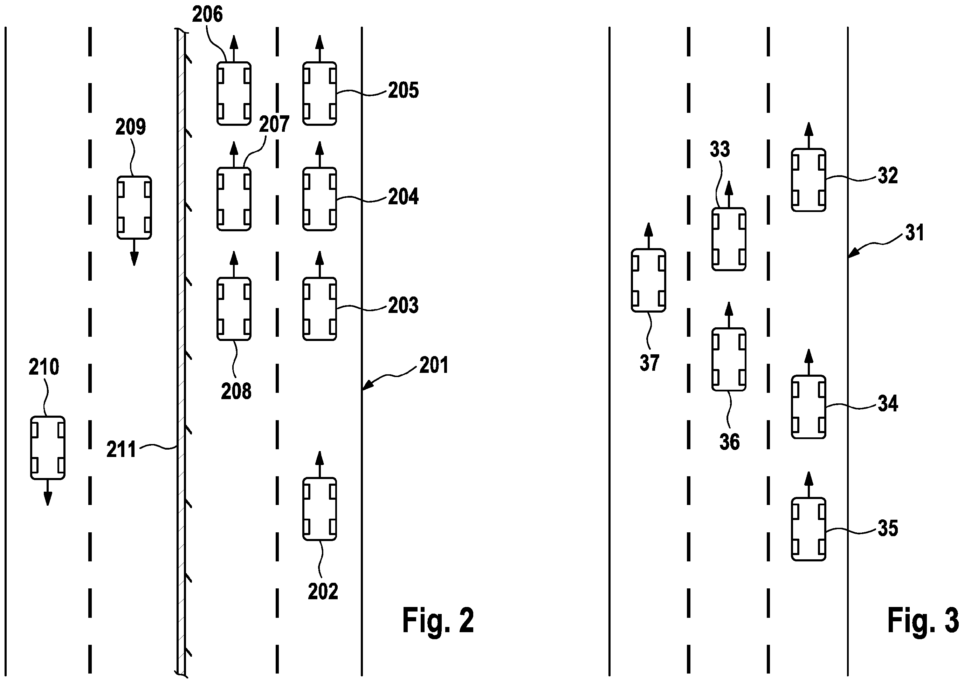

Fig. 2 zeigt vierspurige Straße 201 mit Fahrzeugen 202, 203, 204, 205, 206, 207, 208, 209 und 210. Die an Fahrzeugen 202, 203, 204, 205, 206, 207, 208, 209 und 210 angebrachten Pfeile geben jeweils die Fahrtrichtung an. Wie zu sehen ist, bewegen sich Fahrzeuge 209 und 210 entgegen gerichtet zu Fahrzeugen 202, 203, 204, 205, 206, 207 und 208. Die beiden linken Fahrspuren sind durch Leitplanke 211 von den beiden rechten Fahrspuren getrennt. Fahrzeug 202 ist beispielsgemäß mit dem erfindungsgemäßen System zur Informationsnutzung ausgestattet. Über in Fahrzeug 202 vorhandene Fahrzeug-zu-X-Kommunikationsmittel empfängt Fahrzeug 202 von Fahrzeugen 202, 203, 204, 205, 206, 207 und 208 Fahrzeug-zu-X-Daten, welche die Information umfassen, dass Fahrzeuge 202, 203, 204, 205, 206, 207 und 208 in einem Verkehrsstau stehen und sich nicht bewegen. Mittels eines ebenfalls in Fahrzeug 202 vorhandenen Stereokamerasensors werden gleichzeitig Umfelddaten erfasst, welche jedoch die Informationen umfassen, dass sich Fahrzeuge 203 und 208 mit langsamer Geschwindigkeit in Fahrtrichtung fortbewegen. Ein Vergleich der Werte der Unschärfebehaftungen der Bewegungsinformation in den Stereokamerasensordaten und den Fahrzeug-zu-X-Daten ergibt, dass die Werte der Unschärfebehaftungen sich im Wesentlichen nicht entsprechen. Daher erfolgt keine Zuordnung dieser Informationen zueinander sondern die mittels der Fahrzeug-zu-X-Kommunikationsmittel erfassten Informationen werden lediglich dazu genutzt, um zu bestätigen, dass sich Fahrzeuge 203 und 208 relativ zu Fahrzeug 202 sehr langsam fortbewegen und keine Fehlerfassung des Kamerasensors vorliegt. Die solcherart bestätigte Bewegungsinformation wird genutzt, um eine Warnung an den Fahrer von Fahrzeug 202 auszugeben, damit dieser die Fahrgeschwindigkeit reduziert, um einen Auffahrunfall zu vermeiden.

In Fig. 3 ist dreispurige Straße 31 mit Fahrzeugen 32, 33, 34, 35, 36 und 37 zu sehen. Die an Fahrzeugen 32, 33, 34, 35, 36 und 37 angebrachten Pfeile geben jeweils die Fahrtrichtung an. Fahrzeug 36 ist mit dem erfindungsgemäßen System zur Informationsnutzung, mit Fahrzeug-zu-X-Kommunikationsmitteln und mit einem Lidarsensor ausgestattet. Über die Fahrzeug-zu-X-Kommunikationsmittel erfasst Fahrzeug 36 Positionsinformationen und Geschwindigkeitsinformationen umfassende Fahrzeug-zu-X-Daten von Fahrzeugen 32, 33, 34, 35 und 37. Die in den Fahrzeug-zu-X-Daten enthaltenen Positionsinformationen und Geschwindigkeitsinformationen beschreiben dabei, dass sich Fahrzeuge 32, 33, 34, 35 mit im Wesentlichen identischer und mit im Wesentlichen Fahrzeug 36 entsprechender Geschwindigkeit fortbewegen. Die Fahrzeug 37 zugehörige Geschwindigkeitsinformation beschreibt jedoch eine gegenüber Fahrzeugen 32, 33, 34, 35 und 36 deutlich erhöhte Geschwindigkeit. Diese Geschwindigkeitsinformation wird dazu genutzt, einen Schwellenwert eines auf die Lidarsensordaten wirkenden Objekterkennungsalgorithmus in Fahrzeug 36 zu reduzieren. Wenn Fahrzeug 37 somit in den Erfassungsbereich des Lidarsensors von Fahrzeug 36 eintritt, erfolgt eine beschleunigte Erfassung der Fahrzeug 37 zugehörigen Geschwindigkeitsinformation über den Lidarsensor, da die statistische Sicherheit zur Erkennung dieser Information nur den reduzierten Schwellenwert des Objekterkennungsalgorithmus erreichen muss.

## Patentansprüche

1. Verfahren zur Informationsnutzung,
- bei welchem mittels Sensoren einer ersten Sensorgattung erste Sensordaten erfasst werden und mittels Sensoren einer zweiten Sensorgattung zweite Sensordaten erfasst werden,
- wobei identische Objekte und/oder Objektattribute beschreibende Informationen in den ersten Sensordaten einander zugeordnet werden und identische Objekte und/oder Objektattribute beschreibende Informationen in den zweiten Sensordaten einander zugeordnet werden,
- wobei die ersten Sensordaten erste Unschärfebehaftungen aufweisen und die zweiten Sensordaten zweite Unschärfebehaftungen aufweisen und
**dadurch gekennzeichnet,**
- **dass** ein Vergleich der Werte der ersten und der zweiten Unschärfebehaftungen der identische Objekte und/oder Objektattribute beschreibenden Informationen in den ersten und den zweiten Sensordaten erfolgt,
- wobei die identische Objekte und/oder Objektattribute beschreibenden Informationen in den ersten und den zweiten Sensordaten einander zugeordnet werden, wenn die Werte der ersten und der zweiten Unschärfebehaftungen um nicht mehr als 50% oder um nicht mehr als 25% voneinander abweichen und
- wobei die identische Objekte und/oder Objektattribute beschreibenden Informationen in den ersten Sensordaten durch die zweiten Sensordaten validiert werden, wenn die Werte der ersten und der zweiten Unschärfebehaftungen um mehr als 50% oder um mehr als 25% voneinander abweichen.

2. Verfahren nach Anspruch 1,
**dadurch gekennzeichnet,**
**dass** die Sensoren der ersten Sensorgattung Umfeldsensoren sind und die Sensoren der zweiten Sensorgattung Fahrzeug-zu-X-Kommunikationsmittel sind.

3. Verfahren nach Anspruch 2,
**dadurch gekennzeichnet,**
**dass** die ersten und zweiten Sensordaten jeweils zumindest eine Positionsinformation umfassen und für den Vergleich zunächst die Werte der Unschärfebehaftungen der Positionsinformationen herangezogen werden.

4. Verfahren nach mindestens einem der Ansprüche 2 und 3,
**dadurch gekennzeichnet,**
**dass** zumindest die Positionsinformation in den zweiten Sensordaten vor einem Senden über die Fahrzeug-zu-X-Kommunikationsmittel unter Heranziehen von Daten eines globalen Navigationssatellitensystems erzeugt wurde.

5. Verfahren nach mindestens einem der Ansprüche 1 bis 4,
**dadurch gekennzeichnet,**
**dass** die Zuordnung der Sensordaten die Schritte
- Objekterkennung in den aktuell erfassten Sensordaten und/oder
- Objektverfolgung aus den zuvor erfassten in die aktuell erfassten Sensordaten und/oder
- Ausgleichen von Erfassungszyklusdifferenzen der Sensoren und/oder der Sensorgattungen
umfasst.

6. Verfahren nach mindestens einem der Ansprüche 1 bis 5,
**dadurch gekennzeichnet,**
**dass** Schwellenwerte eines auf die ersten Sensordaten wirkenden Objekterkennungsalgorithmus mittels der zweiten Sensordaten reduziert werden.

7. Verfahren nach mindestens einem der Ansprüche 1 bis 6,
**dadurch gekennzeichnet,**
**dass** ein oberer Grenzwert für die Werte der Unschärfebehaftungen vorgegeben ist, bei dessen Überschreiten unabhängig vom Vergleich die identische Objekte und/oder Objektattribute beschreibenden Informationen in den ersten und den zweiten Sensordaten einander nicht zugeordnet werden.

8. Verfahren nach Anspruch 7,
**dadurch gekennzeichnet,**
**dass** der obere Grenzwert in Abhängigkeit einer erfassten Umfeldobjektdichte angepasst wird, wobei der obere Grenzwert mit einer steigenden Umfeldobjektdichte verringert wird und mit einer abnehmenden Umfeldobjektdichte erhöht wird.

9. Verfahren nach mindestens einem der Ansprüche 1 bis 8,
**dadurch gekennzeichnet,**
**dass** bei sich widersprechenden ersten Sensordaten und/oder unplausiblen ersten Sensordaten identische Objekte und/oder Objektattribute beschreibende Informationen in den ersten und den zweiten Sensordaten einander stets zugeordnet werden.

10. System zur Informationsnutzung,
zumindest umfassend Sensoren einer ersten Sensorgattung und Sensoren einer zweiten Sensorgattung und Vergleichsmittel und Zuordnungsmittel und Bestätigungsmittel,
wobei die Sensoren der ersten Sensorgattung erste Sensordaten erfassen und die Sensoren der zweiten Sensorgattung zweite Sensordaten erfassen,
wobei die Zuordnungsmittel identische Objekte und/oder Objektattribute beschreibende Informationen in den ersten Sensordaten einander zuordnen und identische Objekte und/oder Objektattribute beschreibende Informationen in den zweiten Sensordaten einander zuordnen,
wobei die ersten Sensordaten erste Unschärfebehaftungen aufweisen und die zweiten Sensordaten zweite Unschärfebehaftungen aufweisen und
**dadurch gekennzeichnet,**
**dass** die Vergleichsmittel einen Vergleich der Werte der ersten und der zweiten Unschärfebehaftungen der identische Objekte und/oder Objektattribute beschreibenden Informationen in den ersten und den zweiten Sensordaten ausführen, wobei die Zuordnungsmittel die identische Objekte und/oder Objetattribute beschreibenden Informationen in den ersten und den zweiten Sensordaten einander zuordnen, wenn die Werte der ersten und der zweiten Unschärfebehaftungen um nicht mehr als 50% oder um nicht mehr als 25% voneinander abweichen und
wobei die Bestätigungsmittel die identische Objekte und/oder Objektattribute beschreibenden Informationen in den ersten Sensordaten durch die zweiten Sensordaten validieren, wenn die Werte der ersten und der zweiten Unschärfebehaftungen um mehr als 50% oder um mehr als 25% voneinander abweichen.

11. System nach Anspruch 10,
**dadurch gekennzeichnet,**
**dass** die Sensoren der ersten Sensorgattung ein oder mehrere Elemente aus der Gruppe
- Radarsensor,
- optischer Kamerasensor,
- Lidarsensor,
- Lasersensor und
- Ultraschallsensor
sind.

12. System nach mindestens einem der Ansprüche 10 und 11, **dadurch gekennzeichnet,**
**dass** die Sensoren der zweiten Sensorgattung ein oder mehrere Elemente aus der Gruppe
- WLAN-Verbindungsmittel, insbesondere nach IEEE 802.11,
- ISM-Verbindunsmittel (Industrial, Scientific, Medical Band),
- Bluetooth®-Verbindungsmittel,
- ZigBee-Verbindungsmittel,
- UWB-Verbindungsmittel (Ultra Wide Band),
- WiMax®-Verbindungsmittel (Worldwide Interoperability for Microwave Access),
- Infrarotverbindungsmittel,
- Mobilfunkverbindungsmittel und
- radarbasierte Kommunikationsmittel
sind.

13. System nach mindestens einem der Ansprüche 10 bis 12,
**dadurch gekennzeichnet,**
**dass** das System ein Verfahren nach mindestens einem der Ansprüche 1 bis 9 ausführt.

14. Verwendung des Systems nach mindestens einem der Ansprüche 10 bis 13 in einem Fahrzeug (202, 203, 204, 205, 206, 207, 208, 209, 210, 32, 33, 34, 35, 36, 37), insbesondere in einem Kraftfahrzeug (202, 203, 204, 205, 206, 207, 208, 209, 210, 32, 33, 34, 35, 36, 37).

## Claims

1. A method for information usage,
- in which first sensor data are captured by means of sensors of a first sensor type and second sensor data are captured by means of sensors of a second sensor type,
- wherein information items describing identical objects and/or object attributes in the first sensor data are associated with one another and information items describing identical objects and/or object attributes in the second sensor data are associated with one another,
- wherein the first sensor data have first fuzziness afflictions and the second sensor data have second fuzziness afflictions, and
**characterized in that**
- a comparison of the values of the first and the second fuzziness afflictions of the information items describing identical objects and/or object attributes in the first and the second sensor data is effected,
- wherein the information items describing identical objects and/or object attributes in the first and the second sensor data are associated with one another, if the values of the first and the second fuzziness afflictions deviate from one another by not more than 50% or by not more than 25%, and
- wherein the information items describing identical objects and/or object attributes in the first sensor data are validated by the second sensor data, if the values of the first and the second fuzziness afflictions deviate from one another by more than 50% or by more than 25%.

2. The method according to Claim 1,
**characterized in that**
the sensors of the first sensor type are ambient sensors and the sensors of the second sensor type are vehicle-to-X communication means.

3. The method according to Claim 2,
**characterized in that**
the first and second sensor data respectively comprise at least one position information item, and the values of the fuzziness afflictions of the position information items are used for the comparison first of all.

4. The method according to at least one of Claims 2 and 3, **characterized in that**
at least the position information item in the second sensor data has been produced using data from a global navigation satellite system prior to being sent via the vehicle-to-X communication means.

5. The method according to at least one of Claims 1 to 4,
**characterized in that**
the association of the sensor data comprises the steps of
- object recognition in the currently captured sensor data, and/or
- object tracking from the previously captured to the currently captured sensor data, and/or
- equalization of capture cycle differences of the sensors and/or the sensor types.

6. The method according to at least one of Claims 1 to 5, **characterized in that**
threshold values for an object recognition algorithm acting on the first sensor data are reduced by means of the second sensor data.

7. The method according to at least one of Claims 1 to 6, **characterized in that**
an upper limit value is predefined for the values of the fuzziness afflictions, and if said upper limit value is exceeded then, regardless of the comparison, the information items describing identical objects and/or object attributes in the first and second sensor data are not associated with one another.

8. The method according to Claim 7,
**characterized in that**
the upper limit value is adjusted as a function of a captured ambient object density, wherein the upper limit value is decreased when an ambient object density rises and is increased when an ambient object density falls.

9. The method according to at least one of Claims 1 to 8, **characterized in that**
if first sensor data are contradictory and/or first sensor data are implausible, information items describing identical objects and/or object attributes in the first and the second sensor data are always associated with one another.

10. A system for information usage,
at least comprising sensors of a first sensor type and sensors of a second sensor type and comparison means and association means and confirmation means,
wherein the sensors of the first sensor type capture first sensor data and the sensors of the second sensor type capture second sensor data,
wherein the association means associate information items describing identical objects and/or object attributes in the first sensor data with one another and associate information items describing identical objects and/or object attributes in the second sensor data with one another,
wherein the first sensor data have first fuzziness afflictions and the second sensor data have second fuzziness afflictions, and
**characterized in that**
the comparison means execute a comparison of the values of the first and the second fuzziness afflictions of the information items describing identical objects and/or object attributes in the first and the second sensor data, wherein the association means associate the information items describing identical objects and/or object attributes in the first and the second sensor data with one another, if the values of the first and second fuzziness afflictions deviate from one another by not more than 50% or by not more than 25%, and
wherein the confirmation means validate the information items describing identical objects and/or object attributes in the first sensor data by the second sensor data, if the values of the first and the second fuzziness afflictions deviate from one another by more than 50% or by more than 25%.

11. The system according to Claim 10,
**characterized in that**
the sensors of the first sensor type are one or more elements from the group consisting of
- a radar sensor,
- an optical camera sensor,
- a lidar sensor,
- a laser sensor, and
- an ultrasonic sensor.

12. The system according to at least one of Claims 10 and 11, **characterized in that**
the sensors of the second sensor type are one or more elements from the group consisting of
- WLAN connecting means, in particular in accordance with IEEE 802.11,
- ISM (Industrial, Scientific, Medical band) connecting means,
- Bluetooth® connecting means,
- ZigBee connecting means,
- UWB (Ultra-Wide Band) connecting means,
- WiMax® (Worldwide Interoperability for Microwave Access) connecting means,
- infrared connecting means,
- mobile radio connecting means, and
- radar-based communication means.

13. The system according to at least one of Claims 10 to 12, **characterized in that**
the system executes a method according to at least one of Claims 1 to 9.

14. Use of the system according to at least one of Claims 10 to 13 in a vehicle (202, 203, 204, 205, 206, 207, 208, 209, 210, 32, 33, 34, 35, 36, 37), in particular in a motor vehicle (202, 203, 204, 205, 206, 207, 208, 209, 210, 32, 33, 34, 35, 36, 37).

## Revendications

1. Procédé pour l'utilisation d'informations,
- par lequel des premières données de capteur sont enregistrées à l'aide de capteurs d'un premier type de capteur et des deuxièmes données de capteur sont enregistrées à l'aide de capteurs d'un deuxième type de capteur.
- des informations décrivant des objets et/ou des attributs d'objets identiques dans les premières données de capteur étant attribuées les unes aux autres et des informations décrivant des objets et/ou des attributs d'objets identiques dans les deuxièmes données de capteur étant attribuées les unes aux autres,
- les premières données de capteur présentant des premières marges d'imprécision et les deuxièmes données de capteur présentant des deuxièmes marges d'imprécision et
**caractérisé en ce qu'**
- une comparaison des valeurs des premières et deuxièmes marges d'imprécision des informations décrivant des objets et/ou des attributs d'objets identiques dans les premières et deuxièmes données de capteur est effectuée,
- les informations décrivant des objets et/ou des attributs d'objets identiques dans les premières et deuxièmes données de capteur étant attribuées les unes aux autres lorsque les valeurs des premières et deuxièmes marges d'imprécision ne diffèrent pas de plus de 50 % ou pas de plus de 25 % les unes des autres, et
- les informations décrivant des objets et/ou des attributs d'objets identiques dans les premières données de capteur étant validées par les deuxièmes données de capteur lorsque les valeurs des premières et deuxièmes marges d'imprécision ne diffèrent pas de plus de 50 % ou pas de plus de 25 % les unes des autres.

2. Procédé selon la revendication 1,
**caractérisé en ce que**
les capteurs du premier type de capteurs sont des capteurs d'environnement et les capteurs du deuxième type de capteurs sont des moyens de communication de véhicule à X.

3. Procédé selon la revendication 2,
**caractérisé en ce que**
les premières et deuxièmes données de capteurs comprennent respectivement au moins une information de position et les valeurs des marges d'imprécision des informations de position sont d'abord utilisées pour la comparaison.

4. Procédé selon au moins l'une des revendications 2 et 3, **caractérisé en ce qu'** au moins l'information de position dans les deuxièmes données de capteurs a été générée en en utilisant les données d'un système global de navigation par satellite, avant une émission par les moyens de communication de véhicule à X.

5. Procédé selon au moins l'une des revendications 1 à 4,
**caractérisé en ce que**
l'attribution des données de capteurs comprend les étapes de
- reconnaissance d'objets dans les données de capteurs enregistrées actuellement et/ou
- suivi d'objets des données de capteurs enregistrées précédemment dans les données de capteurs enregistrées actuellement et/ou
- compensation de différences de cycle d'enregistrement des capteurs et/ou des types de capteurs.

6. Procédé selon au moins l'une des revendications 1 à 5, **caractérisé en ce que**
les valeurs de seuil d'un algorithme de détection d'objet opérant sur les premières données de capteurs sont réduites au moyen des deuxièmes données de capteurs.

7. Procédé selon au moins l'une des revendications 1 à 6, **caractérisé en ce qu'**
une valeur limite supérieure est spécifiée pour les valeurs des marges d'imprécision, lors du dépassement de laquelle les informations décrivant des objets et/ou des attributs d'objets identiques dans les premières et deuxièmes données de capteurs ne sont pas attribuées les unes aux autres, indépendamment de la comparaison.

8. Procédé selon la revendication 7,
**caractérisé en ce que**
la valeur limite supérieure est ajustée en fonction d'une densité d'objets d'environnement enregistrée, la valeur limite supérieure étant diminuée lors d'une augmentation de la densité d'objets d'environnement et étant augmentée lors de la diminution de la densité d'objets d'environnement.

9. Procédé selon au moins l'une des revendications 1 à 8, **caractérisé en ce que**
des informations décrivant des objets et/ou des attributs d'objets identiques dans les premières et les deuxièmes données de capteur sont toujours attribuées les unes aux autres lorsque les premières données de capteurs se contredisent et/ou lorsque les premières données de capteurs ne sont pas plausibles.

10. Système pour l'utilisation d'informations,
comprenant au moins des capteurs d'un premier type de capteurs et des capteurs d'un deuxième type de capteurs et des moyens de comparaison et des moyens d'attribution et des moyens de confirmation,
les capteurs du premier type de capteurs enregistrant des premières données de capteurs et les capteurs du deuxième type de capteurs enregistrant des deuxièmes données de capteurs,
les moyens d'attribution attribuant les unes aux autres informations décrivant des objets et/ou des attributs d'objets dans les premières données de capteurs et/ou des informations décrivant des objets et/ou des attributs d'objets dans les deuxièmes données de capteurs,
les premières données de capteur présentant des premières marges d'imprécision et les deuxièmes données de capteur présentant des deuxièmes marges d'imprécision et **caractérisé en ce que**
les moyens de comparaison effectuent une comparaison des valeurs des premières et deuxièmes marges d'imprécision des informations décrivant des objets et/ou des attributs d'objets identiques dans les premières et deuxièmes données de capteur, les moyens d'attribution attribuent les unes aux autres les informations décrivant des objets et/ou des attributs d'objets identiques dans les premières et deuxièmes données de capteur lorsque les valeurs des premières et deuxièmes marges d'imprécision ne diffèrent pas de plus de 50 % ou ne diffèrent pas de plus de 25 % les unes des autres, et
les moyens de confirmation valident les informations décrivant des objets et/ou des attributs d'objets identiques dans les premières données de capteur par les deuxièmes données de capteur, lorsque les valeurs des premières et deuxièmes marges d'imprécision ne diffèrent pas de plus de 50 % ou pas de plus de 25 % les unes des autres.

11. Système selon la revendication 10,
**caractérisé en ce que**
les capteurs du premier type de capteurs sont un ou plusieurs éléments parmi le groupe :
- capteur radar,
- capteur de caméra optique,
- capteur lidar,
- capteur laser et
- capteur à ultrasons.

12. Système selon au moins l'une des revendications 10 et 11, **caractérisé en ce que** les capteurs du deuxième type de capteurs sont un ou plusieurs éléments parmi le groupe :
- moyens de connexion WLAN, en particulier conformément à IEEE 802.11,
- moyens de connexion ISM (bandes industrielle, scientifique, médicale),
- moyens de connexion Bluetooth®,
- moyens de connexion ZigBee,
- moyens de connexion UWB (Ultra-Wide Band),
- moyens de connexion WiMax® (Worldwide Interoperability for Microwave Access),
- moyens de connexion infrarouge,
- moyens de connexion par téléphonie mobile et
- moyens de communication basée sur radar.

13. Système selon au moins l'une des revendications 10 à 12, **caractérisé en ce que** le système exécute un procédé selon au moins l'une des revendications 1 à 9.

14. Utilisation du système selon au moins l'une des revendications 10 à 13 dans un véhicule (202, 203, 204, 205, 206, 207, 208, 209, 210, 32, 33, 34, 35, 36, 37), en particulier dans un véhicule à moteur (202, 203, 204, 205, 206, 207, 208, 209, 210, 32, 33, 34, 35, 36, 37).
